# EUROPEAN PATENT SPECIFICATION

(11) **EP 1 175 360 B1**
(45) Date of publication and mention of the grant of the patent: **09.05.2007**
(21) Application number: 99942671.1
(22) Date of filing: 10.09.1999
(51) Int. Cl.: B65G 47/14, B65G 25/08

(54) **ARTICLE TRANSFER DEVICE**
ÜBERGABEVORRICHTUNG FÜR GEGENSTÄNDE
DISPOSITIF DE TRANSFERT D'ARTICLES

(30) Priority: 27.04.1999 US 131142 P; 30.04.1999 CA 2270484
(43) Date of publication of application: 30.01.2002
(73) Proprietor: Comact Inc., Canton Tremblay, QC G7H 5A8 (CA)
(72) Inventor: DUSSAULT, Jacques, Vanier, Québec G1M 2E4 (CA); CHABOT, Guy, St-Nicolas, Québec G7A 2N3 (CA); POTVIN, Francois, Neuville, Québec G0A 2R0 (CA)
(74) Representative: Schoppe, Fritz
(86) International application number: PCT/CA1999/000825
(87) International publication number: WO 2000/064789

(56) References cited:
- WO-A-82/01179
- WO-A-98/40293
- US-A- 3 509 988
- US-A- 3 561 582
- US-A- 5 678 681

## Description

### BACKGROUND OF THE INVENTION

### 1. FIELD OF THE INVENTION

The present invention relates to a device for transferring logs between two spaced locations, according to the preamble of claim 1. Such a device is known from e.g. WO-A-98/40293.

### 2. DESCRIPTION OF THE RELATED ART

Automated log handling systems have been around for many years and have succeeded, at least in part, in reducing the labor component of the handling of logs while increasing the rate at which the logs are processed by a mill. There are several different versions of log handling devices, including linear versions which function to transfer the logs along a linear, usually upright, axis. One example is that known as a "step" feeder, which has a number of step members reciprocating side-by-side to transfer the logs from an entry point to an exit point, as the logs are moved from one step to the next. Another version is known as a 'quadrant' feeder and an example of this is disclosed in U.S. Patent 5,119,930 to Stelter, which has a movable shelf which travels through an arc between generally an entry point near a *9 o'clock* position to an exit point near a *12 o'clock"* position.

Though satisfactory for their intended purpose, these machines have several disadvantages. Log bark, shavings and other log debris often accumulates relatively quickly on the moving parts requiring a partial plant shut down to clean. In addition, there can be wide variations in the thickness and shape of logs being delivered to the mill. One log might be thick and straight while the next one might be thin and bent, while the next one might be thick with knots. These conventional machines have had mixed success at handling these wide variations in the types of logs and at controlling the buildup of wood debris.

Though not related to log handling systems, U.S. Patent 3.561.582 to Smith discloses a machine to separate and position small elongated articles such as vegetables. The machine comprises two groups of reciprocating shuffle feed members, each having an article advancing face. The article advancing face comprises wedge-shape pockets, each of which are adapted to receive and to position a single article. Moreover, the series of shuffle feed members have their wedges offset laterally toward one side of the machine to produce a feeding action of the articles laterally in the direction of the offset to insure proper orientation of each small article into a wedge-shaped pocket. However, the machine is not adapted to transfer wood logs or similar articles between to spaced locations

In WO 82/01179 to MAGNUSON ENGINEERS INC. et al., published on 15 April 1982, there is disclosed a device for transferring articles between two space locations. The device comprises two groups of inclined platforms which are driven in alternative reciprocating motion to progress articles resting thereon in a forward direction and in alignment and single file order along pathways formed by divider strips which serve also to support the flight members. Each platform has an upper article-receiving surface and a leading edge region, wherein each article-receiving surface of the first group of platforms is overlapped by a platform of the second group. In use, the first group of platforms reciprocates relative to a second corresponding platform between two positions, wherein the leading edge region of each of the first group of platforms is sufficiently near a corresponding leading edge region of the second group, to cause an article to be transferred from one article-receiving surface to another.

It is an object of the present invention to provide an improved log transfer device.

This object is achieved by a device for transferring logs between two spaced locations in accordance with claim 1.

### BRIEF DESCRIPTION OF THE DRAWINGS

Several preferred embodiments of the present invention will now be described, by way of example only, with reference to the appended drawing in which:
Figure 1 is a schematic perspective view of an article transfer device;
Figure 1A is a schematic perspective view of the device of figure 1 in another operative position;
Figure 1B is a side view of the device of figure 1;
Figure 1C is a fragmentary side view of the device of figure 1;
Figure 2 is a sequential schematic view of the device of figure 1 in a number of operational positions;
Figure 3 is a schematic side view of a portion of the device of figure 1;
Figure 3A is a magnified side view taken on circle 3A of figure 3;
Figure 4 is a schematic side view of another article transfer device;
Figure 5 is a schematic perspective view of still another article transfer device;
Figure 6 is a schematic perspective view of still another article transfer device;
Figure 7 is a schematic side view of a portion of still another article transfer device;
Figures 8a to 8d are plan views of alternative article transfer devices according to figure 7; and
Figures 8e to 8h are plan views of alternative article transfer devices according to figure 7.

### DESCRIPTION OF THE PREFERRED EMBODIMENTS

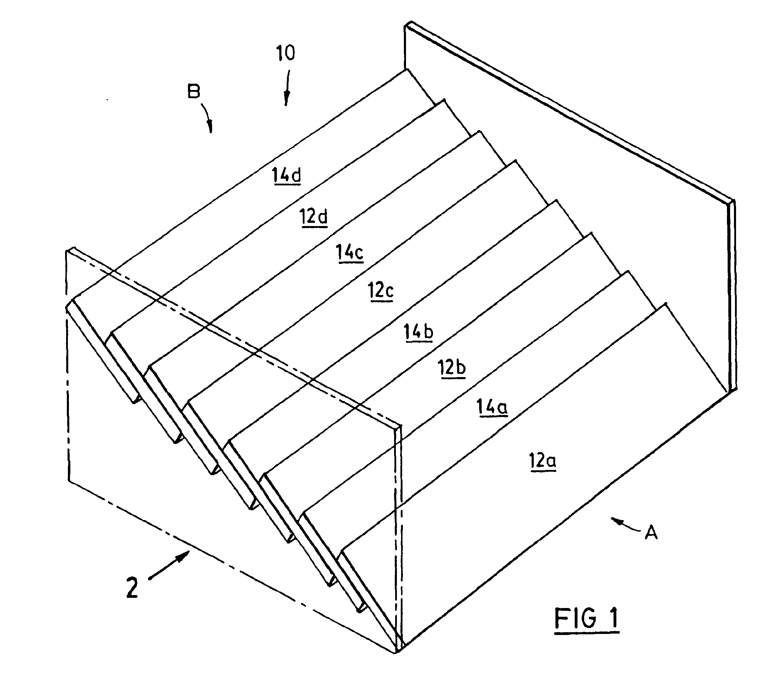

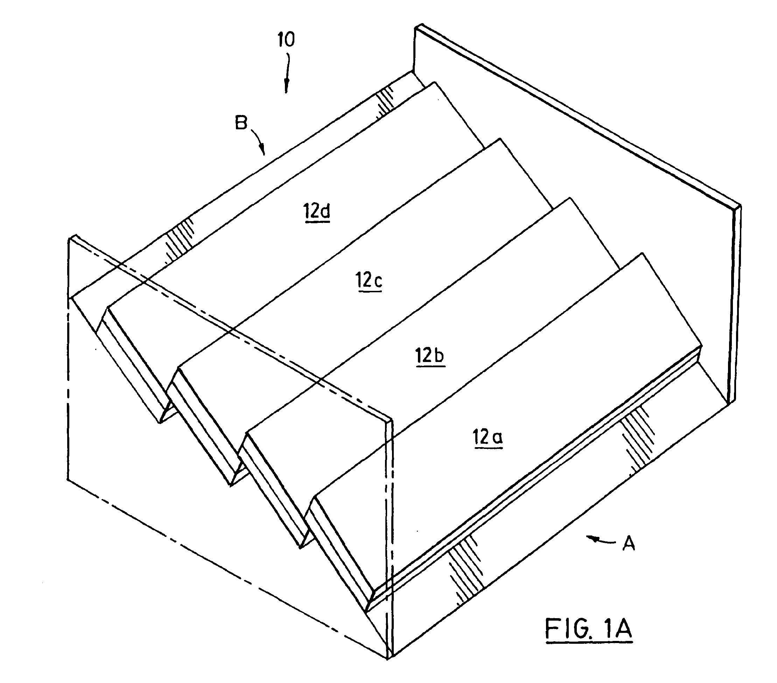

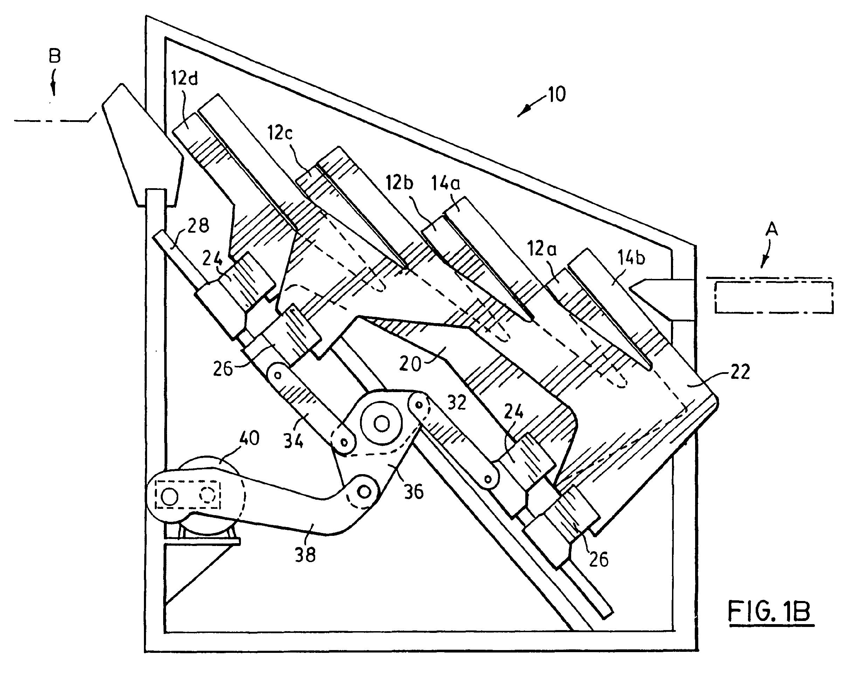

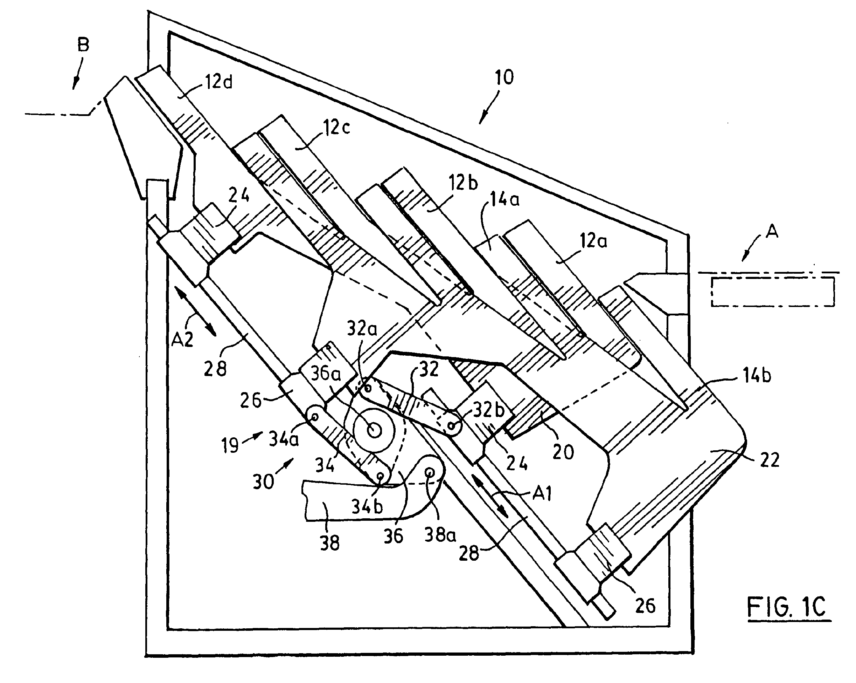

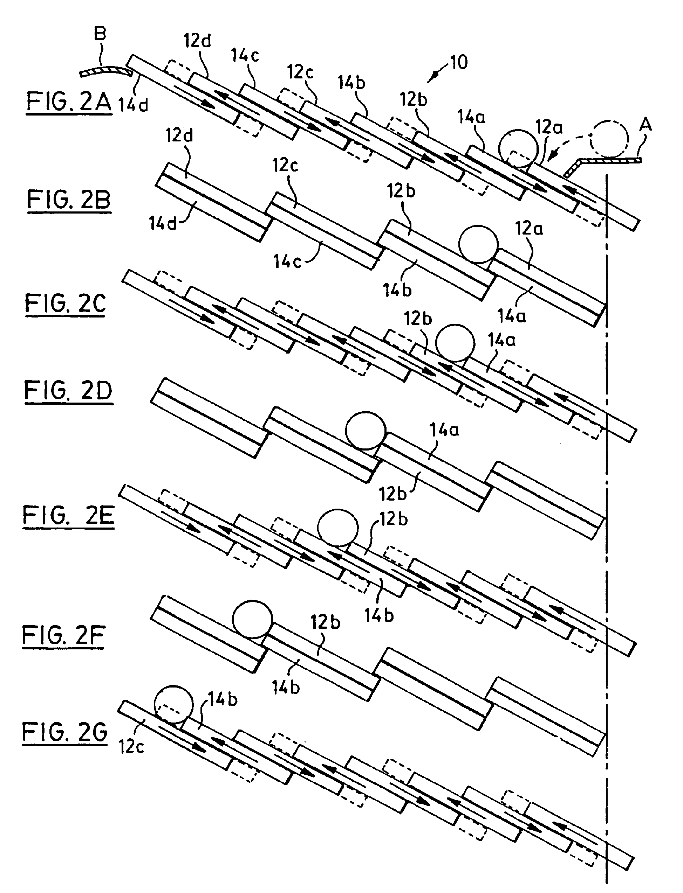

Referring to the figures, particularly figures 1 and 2, there is provided an article transfer device shown schematically at 10, in this particular case for transferring logs from between two spaced locations, shown at A and B. Location A may, for example, be a conveyor path to deliver logs from an upstream processing station or a delivery station, while location B may, for example, be another conveyor path to deliver logs to a downstream processing station.

The device 10 has two groups of inclined platforms shown at 12a, 12b, 12c, 12d and the second group shown at 14a, 14b, 14c and 14d. It can be seen that the platforms 12 are nested between the platforms 14 between the two locations A and B.

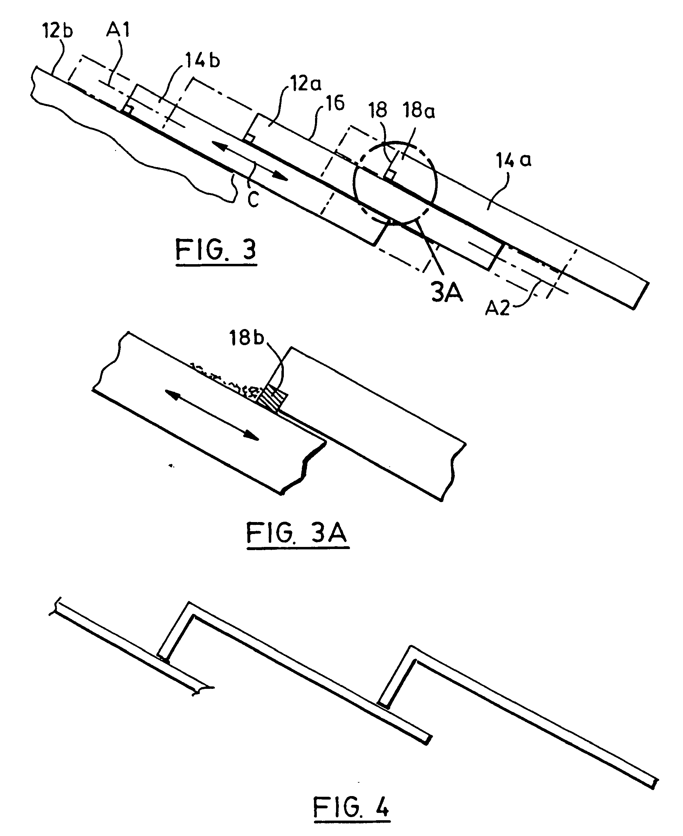

Referring to figure 3, each of the platforms has an upper log-receiving surface 16 and a leading edge region 18 adjacent said upper log-receiving surface. The leading edge region on a platform of the first group travels along the log-receiving surface of a lower platform of the second group in a reciprocal fashion as shown by the arrow 'C' between two limits, a lower limit being shown in dashed lines where the leading edge region, for example of the platform 12a is generally aligned with the leading edge region of the upper platform 14a, and an upper limit shown in chain dotted lines where the leading edge region of the platform 12a is generally aligned with the lower platform 14b. In this case, the platforms 14a and 14b are also traveling in unison between similar upper and lower limits and opposite to the platforms 12a, 12b.

Thus, the device is operable to reciprocate each of the first group of platforms relative to a corresponding second platform between two positions wherein the leading edge region of each of the first group of platforms is sufficiently near a corresponding leading edge region of a platform of the second group, to cause an article to be transferred from one article - receiving surface to another. In this particular case, the upper and lower limits are reached when the leading edge regions of the respective platforms are generally aligned with one another. However, the device may in some cases function to transfer the article from one article-receiving surface to another, without having the leading edge regions generally aligned as in this case. For example, other arrangements may provide the leading edge regions to be within a fraction of 2,5 cm [an inch] or greater to a number of 2,5 cm [inches]. The degree to which the leading edge regions need to be close or aligned will depend on the dimensions of the article being transferred. For example, a relatively large article such as a log, may be successfully transferred in all cases when the leading edge regions are within an inch or so of alignment, whereas a smaller article may need closer alignment of the leading edge regions to achieve successful transfer. Desirably, the alignment of the leading edge regions in this particular case, should allow for substantially all of the log debris and the like to be transferred from the article-receiving surface to another in order to reduce its buildup.

Referring to figures 1B and 1C, drive means is also provided at 19 for driving the first and second groups in a reciprocal motion along parallel axes as shown at A 1 and A2, wherein the first group of platforms is displaced in an opposite manner to the second group. The drive means is operable to displace a selected platform in the above mentioned reciprocal motion between the upper limit. Each of the first group of platforms 12 are mounted on a first drive frame member 20 while each of the second group of platforms 14 are mounted on a second drive frame member 22. Each of the frames 20, 22 are mounted on linear bearing assemblies 24, 26 to travel along inclined tracks 28. A rocker assembly 30 is coupled to respective linear bearing assemblies by way of links 32, 34, which are joined to a central rocker 36, all via pivots 32a, 32b, 34a and 34b. The rocker 36 has a central pivot 36a and a drive link or crank 38 pivoted to the rocker via pivot 38a, wherein the pivots 32a, 34b are substantially equidistant from the central axis, in this case. The drive link 38 is pivoted, at its opposite end, to a drive motor 40. The drive means may also include other aspects of the drive disclosed in WO-A-98/40293.

Thus, as will be described, the leading edge region of the selected platform is operable to displace logs along the next lower platform, thereby to transfer logs from one platform to another as the platforms move in the reciprocal motion.

As can be seen in figure 3, each of the leading edge regions includes an end face 18a which is generally perpendicular to the log-receiving surface. In this case, the end face is generally planar. Desirably, the platforms 12 and 14 are sufficiently close to one another that, in addition to transferring logs from one platform to the next, the reciprocating platforms are capable of transferring debris from one platform to the next, thereby making the task of cleaning a less frequent necessity. If desired, the edge face may also be provided with a resilient seal shown at 18b along its lower edge, for example of suitable plastics such as that sold under the trade name TEFLON for establishing a relatively low friction sliding relationship there between.

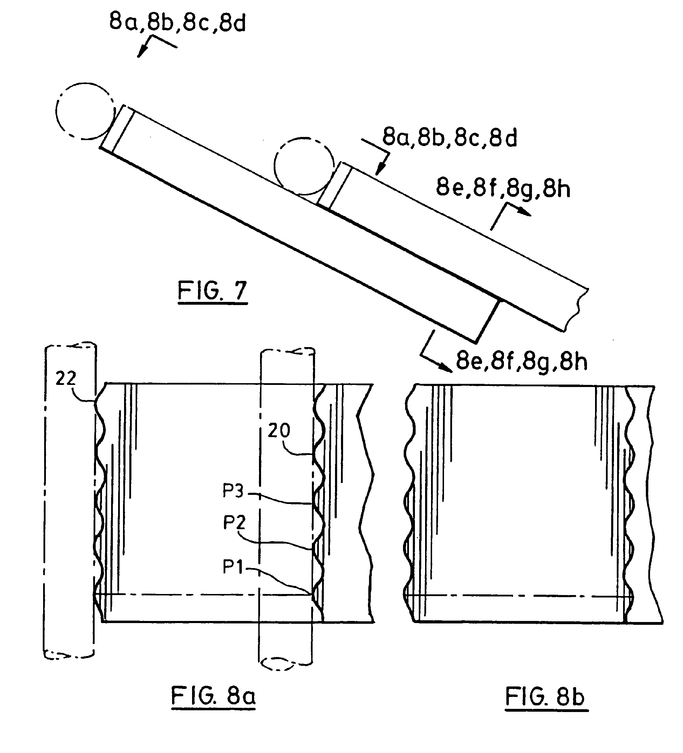

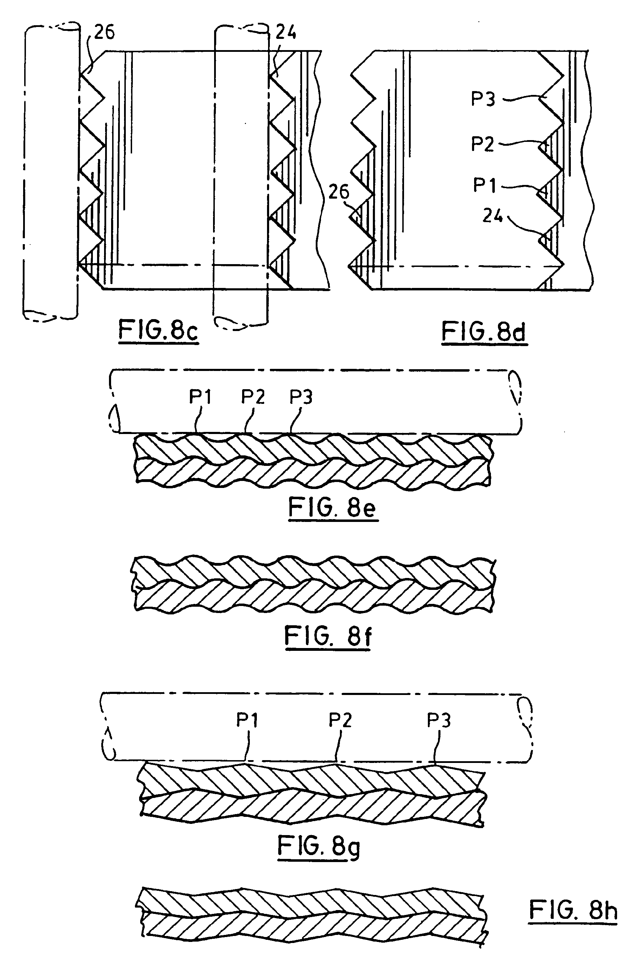

The leading edge region and the platforms themselves can take a number of different forms. For example, the leading edge region can have an undulating profile, for example sinusoidal in profile, as shown in figures 8a, 8b. In this case the peaks 20 of the leading edge region of one platform may be aligned with the peaks 22 of an adjacent platform as shown in figures 8a or laterally offset therefrom as shown in figure 8b. Alternatively, the leading edge region may have a saw tooth profile with peaks 24 as shown in figure 8c, which are aligned with peaks 26 of the adjacent platform. Figure 8d shows the same peaks 24, though in this case laterally offset from the saw tooth peaks 26 of an adjacent platform.

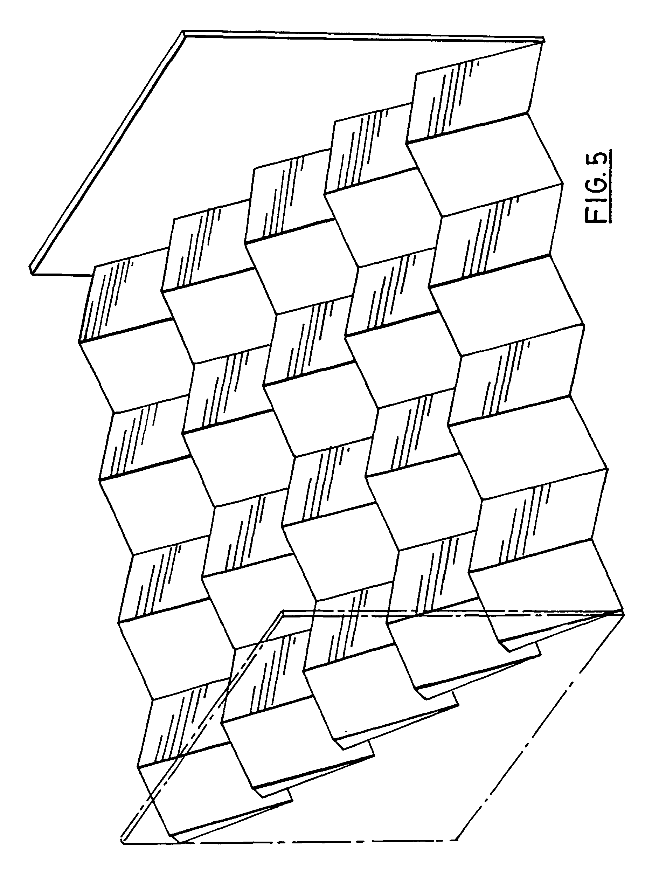

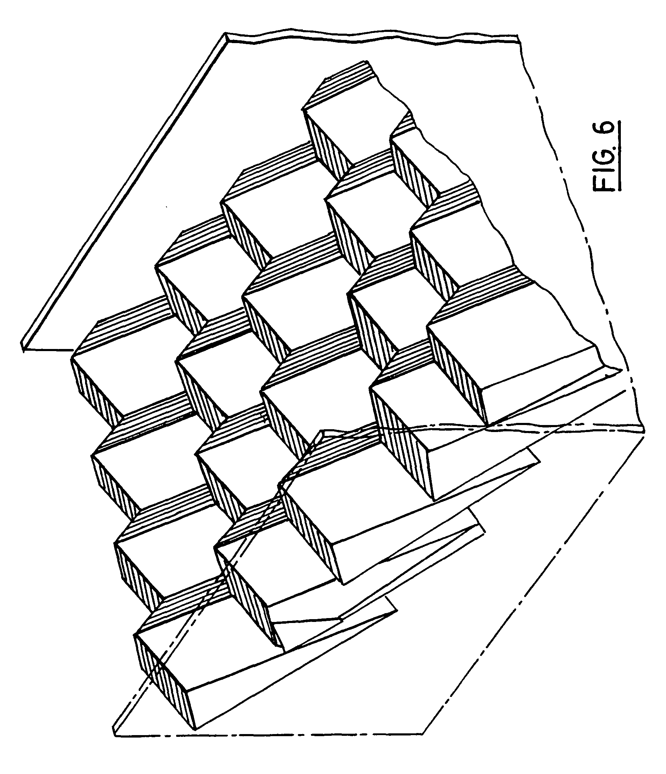

The upper log-receiving surface of the platform may also be non-planar as shown in figures 5, 6 and 8e to 8h. In this case, the platforms may have an angular cross section or a sinusoidal cross section. These log-receiving surfaces may be beneficial, in some cases, because they provide a number of contact regions P1, P2 and P3 with the log which provides a more controlled engagement of the log with the platform, by reducing the chances that the log will teeter, roll or shift as it travels with the platform, to the extent that it slips off the leading edge region. In addition, the leading edge region, when saw toothed, provides a similar benefit in providing a number of contact regions for improved contact with the log. In one example, the angular log-receiving surface and the saw-tooth profiled leading edge region should provide for improved transfer of both the logs between locations A and B and the log debris. Figure 6 shows yet another variation having a leading edge region which is angular in plan and a log receiving surface which is angular in cross section. The device of figure 4 has platforms which have a platform portion and a leading edge region portion.

The device 10 is used in the following manner. First, the location A is positioned so as to receive logs from an incoming conveyor path for example, while location B is similarly positioned adjacent its corresponding output location, that is adjacent a downstream conveyor path. The drive means is initiated, causing the two sets of platforms to move in their reciprocating motion. As a log arrives on the platform 12a from the location A, as shown in figure 2A, it rolls onto the log receiving surface of the first platform 12a and, after the first reciprocating step, finds itself against the leading edge region of the first platform 12a, which in turn displaces the log along the log-receiving surface of the platform 14a upwardly until the leading edge region of platform 12a is aligned with the leading edge region of the platform 14a, where the log rolls onto the log receiving surface of the platform 12b. Similarly, the platform 14a, reciprocates upwardly (as shown in figure 2C) until it reaches its upper aligned position with platform 12b (as shown in figure 2D), causing the log to roll onto the platform 12b. This reciprocal movement of the platforms and the consequential transfer of the log from one log-receiving surface to another, continues upwardly toward the exit region B, where the log is then transferred to a downstream conveyor.

Thus, it will be seen that the first and second groups are preferably arranged to operate in unison and in opposed fashion. However, there may be situations where it is beneficial to have the first and second groups not operating necessarily in unison. For example, there may be applications where the movement of the first and second groups may be sequential, that is operate only when a log is present. There may also be applications where only the first group of platforms is moving relative to the second group of platforms which is stationary, or vice versa.

While the drive systems discussed herein in some cases use linear bearing assemblies, a range of other suspension systems may alternatively be used, such as those using other bearing assemblies such as roller bearings, as well as a pneumatic or hydraulic assemblies, or the like.

## Claims

1. A device for transferring logs between two spaced locations, said device comprising:
two groups of inclined platforms (12, 14), the platforms (12) of the first group being arranged in alternating relation with the platforms (14) of the second group;
each platform (12, 14) having an upper log-receiving surface (16) and a leading edge region (18),
said device being operable to reciprocate the platforms (12) of said first group relative to the platforms (14) of the second group between two positions wherein the leading edge region (18) of each of the platforms (12) of the first group is sufficiently near the leading edge region (18) of a corresponding platform (14) of the second group to cause a log to be transferred from one log-receiving surface (16) to another, **characterized in that**
at least some of said upper log-receiving surfaces (16) or of said leading edge regions (18) comprise a plurality of projections projecting therefrom, said projections comprising an outermost contact region for contacting logs being transferred between said spaced locations, said contact regions being configured as a peak.

2. A device as defined in claim 1 wherein each said upper log-receiving surface (16) of each of said platforms comprises a plurality of fixed projections projecting therefrom, said fixed projections comprising an outermost contact region for contacting logs being transferred between said spaced locations, said contact regions being configured as a peak, said fixed projections being configured to have a saw tooth profile.

3. A device as defined in claim 2 wherein said fixed projections of said platforms (12) of said first group are configured and disposed to be complementary with said fixed projections of said platforms (14) of said second group.

4. A device as defined in claim 1 wherein each said leading edge region (18) of each of said platforms (12, 14) comprises a plurality of projections projecting therefrom, said projections comprising an outermost contact region for contacting logs being transferred between said spaced locations, said contact regions being configured as a peak, said projections being configured to have a saw tooth profile.

5. A device as defined in claim 4 wherein said projections of said platforms (12) of said first group are configured and disposed to be complementary with said projections of said platforms (14) of said second group.

6. A device as defined in claim 1 wherein said platforms (12) of said first group are mounted on a first drive frame member (20) and said platforms (14) of said second group are mounted on a second drive frame member (22), said first and second drive frame members (20, 22) each being mounted on linear bearing assemblies (24, 26;)
said device further comprising a drive means disposed beneath said first and second groups of inclined platforms (12, 14), said drive means comprising a motor (40) driving a drive link (38), said drive link (38) causing driving of a rocker assembly (30), said rocker assembly (30) further comprising a central pivot (36a) and two pivots (32a, 34b) spaced therefrom, each of said pivots (32a, 34b) being coupled with a corresponding one of said drive frame members (20, 22).

7. A device as defined in claim 6. wherein said first drive frame (20) is disposed adjacent said second drive frame (22).

8. A device as defined in claim 6 or claim 7 wherein said rocker assembly (30) comprises a rocker (36) and a pair of links (32, 34).

9. A device as defined in claim 1, wherein:
the log-receiving surface (16) and the leading edge region (18) of each platform (12, 14) both have a complementary saw tooth profile creating a plurality of contact regions.

10. A device (10) as defined in claim 9, **characterised in that** in the two positions, the leading edge region (18) of each platform (12) of the first group is substantially aligned with the leading edge region (18) of a corresponding platform (14) of the second group.

11. A device (10) as defined in claim 9 or 10, **characterised in that** the device (10) is operable to reciprocate the first group of platforms (12) in unison.

12. A device (10) as defined in claim 9 or 10, **characterised in that** the device (10) is operable to reciprocate the platforms (12, 14) of both the first and second groups between the two positions.

13. A device (10) as defined in claim 9 or 10, **characterised in that** the device (10) is operable to reciprocate the first group of platforms (12) in unison and the second group of platforms (14) in unison and opposite the first group of platforms (12).

14. A device (10) as defined in claim 9, chracterised in that the saw tooth profile of the leading edge region (18) of each platform (12, 14) is laterally offset from the saw tooth profile of the leading edge region (18) of an adjacent platform (12, 14).

15. A device (10) as defined in anyone of claims 9 to 14, **characterised in that** the leading edge region (18) of one of the platforms (12, 14) is in close contact with the log-receiving surface (16) of an adjacent platform (12, 14).

16. A device (10) as defined in anyone of claims 9 to 15, **characterised in that** it further comprises drive means for driving the first and second groups of platforms (12, 14) in a reciprocal motion.

17. A device (10) as defined in claim 16, **characterised in that** the platforms (12) of the first group are mounted on a first drive frame member (20) and the platforms (14) of the second group are mounted on a second drive frame member (22), the drive frame members (20, 22) being mounted on linear bearing assemblies (24, 26).

18. A device (10) as defined in claim 17, **characterised in that** the drive means further comprises a motor (40) driving a drive link (38), the drive link (38) being connected to a rocker assembly (30), the rocker assembly (30) comprising a central pivot (36a) and two pivots (32a, 34b) spaced therefrom, each of the pivots (32a, 34b) being coupled with a corresponding one of the drive frame members (20, 22).

19. A device (10) as defined in claim 18, **characterised in that** the pivots (32a, 34b) are equidistant from the central pivot (36a).

20. A device (10) as defined in anyone of claims 1 to 19, wherein:
said platforms (12) of said first group are mounted on a first drive frame member (20) and said platforms (14) of said second group are mounted on a second drive frame member (22), said first and second drive frame members each being mounted on linear bearing assemblies (24, 26),
said device comprises a drive means disposed beneath said first and second groups of inclined platforms,
said drive means comprises a motor (40) driving a drive link (38), said drive link (38) causing driving of a rocker assembly (30), said rocker assembly (30) further comprising a central pivot (36a) and two pivots (32a, 34b) spaced therefrom, each of said pivots (32a, 34b) being coupled with a corresponding one of said drive frame members (20, 22).

21. A device as defined in claim 20, wherein said first drive frame (20) is disposed adjacent said second drive frame (22).

## Patentansprüche

1. Eine Vorrichtung zum Transportieren von Stämmen zwischen zwei beabstandeten Orten, wobei die Vorrichtung folgende Merkmale aufweist:
zwei Gruppen geneigter Plattformen (12, 14), wobei die Plattformen (12) der ersten Gruppe in abwechselnder Beziehung zu den Plattformen (14) der zweiten Gruppe angeordnet sind;
wobei jede Plattform (12, 14) eine obere Stammaufnahmeoberfläche (16) und eine Vorderkantenregion (18) aufweist,
wobei die Vorrichtung wirksam ist, um die Plattformen (12) der ersten Gruppe relativ zu den Plattformen (14) der zweiten Gruppe zwischen zwei Positionen hin- und herzubewegen, wobei die Vorderkantenregion (18) jeder der Plattformen (12) der ersten Gruppe ausreichend nahe an der Vorderkantenregion (18) einer entsprechenden Plattform (14) der zweiten Gruppe ist, um zu bewirken, dass ein Stamm von einer Stammaufnahmeoberfläche (16) zu einer anderen transportiert wird, **dadurch gekennzeichnet, dass**
zumindest einige der oberen Stammaufnahmeoberflächen (16) oder der Vorderkantenregionen (18) eine Mehrzahl von Vorsprüngen aufweisen, die von denselben vorstehen, wobei die Vorsprünge eine äußerste Kontaktregion zum Berühren von Stämmen, die gerade zwischen den beabstandeten Orten transportiert werden, aufweisen, wobei die Kontaktregionen als eine Spitze konfiguriert sind.

2. Eine Vorrichtung gemäß Anspruch 1, bei der jede obere Stammaufnahmeoberfläche (16) jeder der Plattformen eine Mehrzahl fester Vorsprünge, die von denselben vorstehen, aufweist, wobei die festen Vorsprünge eine äußerste Kontaktregion zum Berühren von Stämmen, die gerade zwischen den beabstandeten Orten transportiert werden, aufweisen, wobei die Kontaktregionen als eine Spitze konfiguriert sind, wobei die festen Vorsprünge konfiguriert sind, um ein Sägezahnprofil aufzuweisen.

3. Eine Vorrichtung gemäß Anspruch 2, bei der die festen Vorsprünge der Plattformen (12) der ersten Gruppe konfiguriert und angeordnet sind, um komplementär zu den festen Vorsprüngen der Plattformen (14) der zweiten Gruppe zu sein.

4. Eine Vorrichtung gemäß Anspruch 1, bei der jede Vorderkantenregion (18) jeder der Plattformen (12, 14) eine Mehrzahl von Vorsprüngen, die von denselben vorstehen, aufweist, wobei die Vorsprünge eine äußerste Kontaktregion zum Berühren von Stämmen, die gerade zwischen den beabstandeten Orten transportiert werden, aufweisen, wobei die Kontaktregionen als eine Spitze konfiguriert sind, wobei die Vorsprünge konfiguriert sind, um ein Sägezahnprofil aufzuweisen.

5. Eine Vorrichtung gemäß Anspruch 4, bei der die Vorsprünge der Plattformen (12) der ersten Gruppe konfiguriert und angeordnet sind, um komplementär zu den Vorsprüngen der Plattformen (14) der zweiten Gruppe zu sein.

6. Eine Vorrichtung gemäß Anspruch 1, bei der die Plattformen (12) der ersten Gruppe an einem ersten Antriebsrahmenbauteil (20) befestigt sind und die Plattformen (14) der zweiten Gruppe an einem zweiten Antriebsrahmenbauteil (22) befestigt sind, wobei das erste und das zweite Antriebsrahmenbauteil (20, 22) jeweils an linearen Lageranordnungen (24, 26) befestigt sind,
wobei die Vorrichtung ferner eine Antriebseinrichtung aufweist, die unterhalb der ersten und der zweiten Gruppe geneigter Plattformen (12, 14) angeordnet ist, wobei die Antriebseinrichtung einen Motor (40) aufweist, der eine Antriebsverbindung (38) antreibt, wobei die Antriebsverbindung (38) ein Antreiben einer Wippanordnung (30) bewirkt, wobei die Wippanordnung (30) ferner einen mittleren Drehpunkt (36a) und zwei Drehpunkte (32a, 34b), die von demselben beabstandet sind, aufweist, wobei jeder der Drehpunkte (32a, 34b) mit einem entsprechenden der Antriebsrahmenbauteile (20, 22) gekoppelt ist.

7. Eine Vorrichtung gemäß Anspruch 6, bei der der erste Antriebsrahmen (20) benachbart zu dem zweiten Antriebsrahmen (22) angeordnet ist.

8. Eine Vorrichtung gemäß Anspruch 6 oder Anspruch 7, bei der die Wippanordnung (30) eine Wippe (36) und ein Paar von Verbindungen (32, 34) aufweist.

9. Eine Vorrichtung gemäß Anspruch 1, bei der:
die Stammaufnahmeoberfläche (16) und die Vorderkantenregion (18) jeder Plattform (12, 14) beide ein komplementäres Sägezahnprofil aufweisen, das eine Mehrzahl von Kontaktregionen erzeugt.

10. Eine Vorrichtung (10) gemäß Anspruch 9, **dadurch gekennzeichnet, dass** in den beiden Positionen die Vorderkantenregion (18) jeder Plattform (12) der ersten Gruppe im Wesentlichen mit der Vorderkantenregion (18) einer entsprechenden Plattform (14) der zweiten Gruppe ausgerichtet ist.

11. Eine Vorrichtung (10) gemäß Anspruch 9 oder 10, **dadurch gekennzeichnet, dass** die Vorrichtung (10) wirksam ist, um die erste Gruppe von Plattformen (12) im Gleichklang hin- und herzubewegen.

12. Eine Vorrichtung (10) gemäß Anspruch 9 oder 10, **dadurch gekennzeichnet, dass** die Vorrichtung (10) wirksam ist, um die Plattformen (12, 14) sowohl der ersten als auch der zweiten Gruppe zwischen den beiden Positionen hin- und herzubewegen.

13. Eine Vorrichtung (10) gemäß Anspruch 9 oder 10, **dadurch gekennzeichnet, dass** die Vorrichtung (10) wirksam ist, um die erste Gruppe von Plattformen (12) im Gleichklang und die zweite Gruppe von Plattformen (14) im Gleichklang und entgegengesetzt zu der ersten Gruppe von Plattformen (12) hin- und herzubewegen.

14. Eine Vorrichtung (10) gemäß Anspruch 9, **dadurch gekennzeichnet, dass** das Sägezahnprofil der Vorderkantenregion (18) jeder Plattform (12, 14) seitlich von dem Sägezahnprofil der Vorderkantenregion (18) einer benachbarten Plattform (12, 14) versetzt ist.

15. Eine Vorrichtung (10) gemäß einem der Ansprüche 9 bis 14, **dadurch gekennzeichnet, dass** die Vorderkantenregion (18) einer der Plattformen (12, 14) in engem Kontakt mit der Stammaufnahmeoberfläche (16) einer benachbarten Plattform (12, 14) steht.

16. Eine Vorrichtung (10) gemäß einem der Ansprüche 9 bis 15, **dadurch gekennzeichnet, dass** diese ferner eine Antriebseinrichtung zum Antreiben der ersten und der zweiten Gruppe von Plattformen (12, 14) in einer hin- und hergehenden Bewegung aufweist.

17. Eine Vorrichtung (10) gemäß Anspruch 16, **dadurch gekennzeichnet, dass** die Plattformen (12) der ersten Gruppe an einem ersten Antriebsrahmenbauteil (20) befestigt sind und die Plattformen (14) der zweiten Gruppe an einem zweiten Antriebsrahmenbauteil (22) befestigt sind, wobei die Antriebsrahmenbauteile (20, 22) an linearen Lageranordnungen (24, 26) befestigt sind.

18. Eine Vorrichtung (10) gemäß Anspruch 17, **dadurch gekennzeichnet, dass** die Antriebseinrichtung ferner einen Motor (40) aufweist, der eine Antriebsverbindung (38) antreibt, wobei die Antriebsverbindung (38) mit einer Wippanordnung (30) verbunden ist, wobei die Wippanordnung (30) einen mittleren Drehpunkt (36a) und zwei Drehpunkte (32a, 34b), die von demselben beabstandet sind, aufweist, wobei jeder der Drehpunkte (32a, 34b) mit einem entsprechenden der Antriebsrahmenbauteile (20, 22) gekoppelt ist.

19. Eine Vorrichtung (10) gemäß Anspruch 18, **dadurch gekennzeichnet, dass** die Drehpunkte (32a, 34b) in gleicher Entfernung von dem mittleren Drehpunkt (36a) sind.

20. Eine Vorrichtung (10) gemäß einem der Ansprüche 1 bis 19, bei der:
die Plattformen (12) der ersten Gruppe an einem ersten Antriebsrahmenbauteil (20) befestigt sind und die Plattformen (14) der zweiten Gruppe an einem zweiten Antriebsrahmenbauteil (22) befestigt sind, wobei das erste und das zweite Antriebsrahmenbauteil jeweils an linearen Lageranordnungen (24, 26) befestigt sind,
die Vorrichtung eine Antriebseinrichtung aufweist, die unterhalb der ersten und der zweiten Gruppe geneigter Plattformen angeordnet ist,
die Antriebseinrichtung einen Motor (40) aufweist, der eine Antriebsverbindung (38) antreibt, wobei die Antriebsverbindung (38) ein Antreiben einer Wippanordnung (30) bewirkt, wobei die Wippanordnung (30) ferner einen mittleren Drehpunkt (36a) und zwei Drehpunkte (32a, 34b), die von demselben beabstandet sind, aufweist, wobei jeder der Drehpunkte (32a, 34b) mit einem entsprechenden der Antriebsrahmenbauteile (20, 22) gekoppelt ist.

21. Eine Vorrichtung gemäß Anspruch 20, bei der der erste Antriebsrahmen (20) benachbart zu dem zweiten Antriebsrahmen (22) angeordnet ist.

## Revendications

1. Dispositif pour transférer des grumes entre deux endroits distants l'un de l'autre, ledit dispositif comprenant :
deux groupes de plateformes inclinées (12, 14), les plateformes (12) du premier groupe étant disposées de manière alternée avec les plateformes (14) du deuxième groupe ;
chaque plateforme (12, 14) ayant une surface de réception de grume supérieure (16) et une région de bord avant (18),
ledit dispositif étant opérationnel pour alterner les plateformes (12) dudit premier groupe par rapport aux plateformes (14) du deuxième groupe entre deux positions où la région de bord avant (18) de chacune des plateformes (12) du premier groupe est suffisamment rapprochée de la région de bord avant (18) d'une plateforme correspondante (14) du deuxième groupe pour qu'une grume soit transférée d'une surface de réception de grume (16) à l'autre,
**caractérisé par le fait que**
au moins certaines desdites surfaces de réception de grume supérieures (16) ou desdites régions de bord avant (18) comprennent une pluralité de saillies ressortant de celles-ci, lesdites saillies comprenant une région de contact extérieure pour entrer en contact avec les grumes transférées entre lesdits endroits distants l'un de l'autre, lesdites régions de contact étant configurées en forme de crête.

2. Dispositif selon la revendication 1, dans lequel chaque dite surface de réception de grume supérieure (16) de chacune desdites plateformes comprend une pluralité de saillies fixes ressort de celles-ci, lesdites saillies fixes comprenant une région de contact extérieure pour entrer en contact avec les grumes transférées entre lesdits endroits distants l'un de l'autre, lesdites régions de contact étant configurées en forme de crête, lesdites saillies fixes étant configurées de manière à présenter un profil en dents de scie.

3. Dispositif selon la revendication 2, dans lequel lesdites saillies fixes desdites plateformes (12) dudit premier groupe sont configurées et disposées de manière à être complémentaires desdites saillies fixes desdites plateformes (14) dudit deuxième groupe.

4. Dispositif selon la revendication 1, dans lequel chaque dite région de bord avant (18) de chacune desdites plateformes (12, 14) comprend une pluralité de saillies ressortant de celles-ci, lesdites saillies comprenant une région de contact extérieure pour entrer en contact avec les grumes transférées entre lesdits endroits distants l'un de l'autre, lesdites régions de contact étant configurées en forme de crête, lesdites saillies étant configurées de manière à présenter un profil en dents de scie.

5. Dispositif selon la revendication 4, dans lequel lesdites saillies desdites plateformes (12) dudit premier groupe sont configurées et disposées de manière à être complémentaires desdites saillies desdites plateformes (14) dudit deuxième groupe.

6. Dispositif selon la revendication 1, dans lequel lesdites plateformes (12) dudit premier groupe sont montées sur un premier élément de bâti d'entraînement (20) et lesdites plateformes (14) dudit deuxième groupe sont montées sur un deuxième élément de bâti d'entraînement (22), lesdits premier et deuxième éléments de bâti d'entraînement (20, 22) étant montés, chacun, sur des ensembles de support linéaires (24, 26) ;
ledit dispositif comprenant, par ailleurs, un moyen d'entraînement disposé sous lesdits premier et deuxième groupes de plateformes inclinées (12, 14), ledit moyen d'entraînement comprenant un moteur (40) entraînant un maillon d'entraînement (38), ledit maillon d'entraînement (38) provoquant l'entraînement d'un ensemble culbuteur (30), ledit ensemble culbuteur (30) comprenant, par ailleurs, un pivot central (36a) et deux pivots (32a, 34b) espacés de ce dernier, chacun desdits pivots (32a, 34b) étant couplé à l'un correspondant desdits éléments de bâti d'entraînement (20, 22).

7. Dispositif selon la revendication 6, dans lequel ledit premier bâti d'entraînement (20) est disposé adjacent audit deuxième bâti d'entraînement (22).

8. Dispositif selon la revendication 6 ou la revendication 7, dans lequel ledit ensemble culbuteur (30) comprend un culbuteur (36) et une paire de maillons (32, 34).

9. Dispositif selon la revendication 1, dans lequel :
la surface de réception de grume (16) et la région de bord avant (18) de chaque plateforme (12, 14) présentent tous deux un profil en dents de scie complémentaire créant une pluralité de régions de contact.

10. Dispositif (10) selon la revendication 9, **caractérisé par le fait que**, dans les deux positions, la région de bord avant (18) de chaque plateforme (12) du premier groupe est sensiblement alignée sur la région de bord avant (18) d'une plateforme correspondante (14) du deuxième groupe.

11. Dispositif (10) selon la revendication 9 ou 10, **caractérisé par le fait que** le dispositif (10) est opérationnel pour déplacer en va-et-vient le premier groupe de plateformes (12) à l'unisson.

12. Dispositif (10) selon la revendication 9 ou 10, **caractérisé par le fait que** le dispositif (10) est opérationnel pour déplacer en va-et-vient les plateformes (12, 14) des premier et deuxième groupes entre les deux positions.

13. Dispositif (10) selon la revendication 9 ou 10, **caractérisé par le fait que** le dispositif (10) est opérationnel pour déplacer en va-et-vient le premier groupe de plateformes (12) à l'unisson et le deuxième groupe de plateformes (14) à l'unisson et dans le sens opposé au premier groupe de plateformes (12).

14. Dispositif (10) selon la revendication 9, **caractérisé par le fait que** le profil en dents de scie de la région de bord avant (18) de chaque plateforme (12, 14) est excentré latéralement par rapport au profil en dents de scie de la région de bord avant (18) d'une plateforme adjacente (12, 14).

15. Dispositif (10) selon l'une quelconque des revendications 9 à 14, **caractérisé par le fait que** la région de bord avant (18) de l'une des plateformes (12, 14) est en contact étroit avec la surface de réception de grume (16) d'une plateforme adjacente (12, 14) .

16. Dispositif (10) selon l'une quelconque des revendications 9 à 15, **caractérisé par le fait qu'**il comprend, par ailleurs, un moyen d'entraînement destiné à entraîner les premier et deuxième groupes de plateformes (12, 14) selon un mouvement de va-et-vient.

17. Dispositif (10) selon la revendication 16, **caractérisé par le fait que** les plateformes (12) du premier groupe sont montées sur un premier élément de bâti d'entraînement (20) et que les plateformes (14) du deuxième groupe sont montées sur un deuxième élément de bâti d'entraînement (22), les éléments de bâti d'entraînement (20, 22) étant montés sur des ensembles de support linéaires (24, 26).

18. Dispositif (10) selon la revendication 17, **caractérisé par le fait que** le moyen d'entraînement comprend, par ailleurs, un moteur (40) entraînant un maillon d'entraînement (38), le maillon d'entraînement (38) étant connecté à un ensemble culbuteur (30), l'ensemble culbuteur (30) comprenant un pivot central (36a) et deux pivots (32a, 34b) espacés de ce dernier, chacun des pivots (32a, 34b) étant couplé à l'un correspondant des éléments de bâti d'entraînement (20, 22).

19. Dispositif (10) selon la revendication 18, **caractérisé par le fait que** les pivots (32, 34b) sont équidistants du pivot central (36a).

20. Dispositif (10) selon l'une quelconque des revendications 1 à 19, dans lequel :
lesdites plateformes (12) dudit premier groupe sont montées sur un premier élément de bâti d'entraînement (20) et les plateformes (14) dudit deuxième groupe sont montées sur un deuxième élément de bâti d'entraînement (22), lesdits premier et deuxième éléments de bâti d'entraînement étant montés, chacun, sur des ensembles de support linéaires (24, 26),
ledit dispositif comprend un moyen d'entraînement disposé sous lesdits premier et deuxième groupes de plateformes inclinées,
ledit moyen d'entraînement comprend un moteur (40) entraînant un maillon d'entraînement (38), ledit maillon d'entraînement (38) provoquant l'entraînement d'un ensemble culbuteur (30), l'ensemble culbuteur (30) comprenant, par ailleurs, un pivot central (36a) et deux pivots (32a, 34b) espacés de ce dernier, chacun desdits pivots (32a, 34b) étant couplé à l'un correspondant desdits éléments de bâti d'entraînement (20, 22).

21. Dispositif selon la revendication 20, dans lequel ledit premier bâti d'entraînement (20) est disposé adjacent audit deuxième bâti d'entraînement (22).
